# EUROPEAN PATENT APPLICATION

(11) **EP 1 829 758 A1**
(43) Date of publication of application: **05.09.2007**
(21) Application number: 06004309.8
(22) Date of filing: 03.03.2006
(51) Int. Cl.: B60S 1/38

(54) **Windshield wiper assembly**

(71) Applicant: Lin, Chin-Lien, Taipei (TW)
(72) Inventor: Lin, Chin-Lien, Taipei (TW)
(74) Representative: Reichel, Wolfgang

(57) **Abstract**

A windshield wiper assembly includes a steel plate (20), a mounting plate (30) secured to the steel plate and having a slideway (32), and a wiper (90) slidable into the slideway of the mounting plate. Thus, the steel plate is formed integrally without forming any groove so that the steel plate has a greater strength, thereby enhancing the strength of the windshield wiper assembly. In addition, the wiper is removable from the mounting plate, so that the wiper can be replaced without having to replace the whole windshield wiper assembly, thereby saving the cost of maintenance.

## Description

The present invention relates to a windshield wiper assembly.

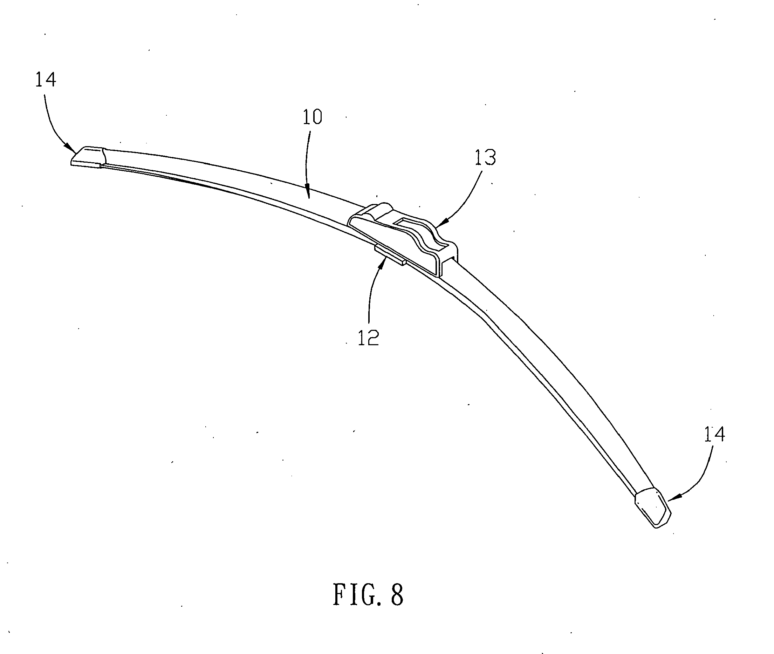

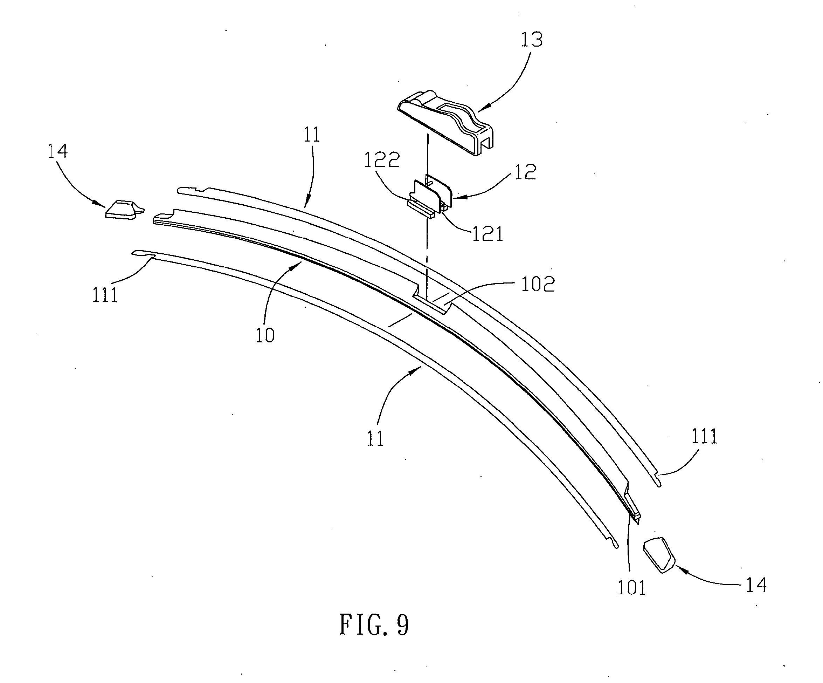

A conventional windshield wiper assembly in accordance with the prior art shown in Figs. 8 and 9 comprises a wiper 10 having two sides each formed with a groove 101 and a mediate portion formed with an opening 102, two steel plates 11 each inserted into the respective groove 101 of the wiper 10 and each having two ends each provided which a hook 111, two side covers 14 mounted on two ends of the wiper 10 and engaged with the hooks 111 of the two ends of the two steel plates 11, a snapping seat 12 snapped into the opening 102 of the wiper 10 and having a clamping portion 121 clamped on the two steel plates 11 and two side walls each formed with a locking groove 122, and an outer cover 13 mounted on the snapping seat 12 and locked by the locking grooves 122 of the snapping seat 12. However, the wiper 10 is supported by the two steel plates 11 which are separated from each other to decrease the strength of the two steel plates 11 so that the windshield wiper assembly has a weaker strength. In addition, it is necessary to replace the whole windshield wiper assembly when the wiper 10 is worn out, thereby decreasing the lifetime of the windshield wiper assembly, and thereby increasing the cost of maintenance of the windshield wiper assembly.

The primary objective of the present invention is to provide a windshield wiper assembly having an enhanced strength.

Another objective of the present invention is to provide a windshield wiper assembly, wherein the steel plate is formed integrally without forming any groove so that the steel plate has a greater strength, thereby enhancing the strength of the windshield wiper assembly.

A further objective of the present invention is to provide a windshield wiper assembly, wherein the steel plate is a single element that is closely rested on the windshield of a car, so that the steel plate is not worn out easily, thereby enhancing the lifetime of the windshield wiper assembly.

A further objective of the present invention is to provide a windshield wiper assembly, wherein the wiper is removable from the mounting plate for replacement of the wiper, so that the wiper can be replaced without having to replace the whole windshield wiper assembly, thereby saving the cost of maintenance of the windshield wiper assembly.

A furlher objective of the present invention is to provide a windshield wiper assembly, wherein the side covers are removable from the steel plate easily and rapidly by the leverage principle to detach the wiper from the mounting plate, so that the wiper can be replaced easily and rapidly, thereby facilitating a user replacing the wiper.

In accordance with the present invention, there is provided a windshield wiper assembly, comprising a steel plate having two ends, a mounting plate secured to the steel plate and having an inside formed with a slideway, and a wiper detachably mounted on the mounting plate and slidable into the slideway of the mounting plate.

Further benefits and advantages of the present invention will become apparent after a careful reading of the detailed description with appropriate reference to the accompanying drawings.

In the drawings:
Fig. 1 is a perspective view of a windshield wiper assembly in accordance with the preferred embodiment of the present invention.
Fig. 2 is an exploded perspective view of the windshield wiper assembly as shown in Fig. 1.
Fig. 3 is a perspective view of a side cover of the windshield wiper assembly as shown in Fig. 2.
Fig. 4 is a side plan cross-sectional view of the windshield wiper assembly as shown in Fig. 1.
Fig. 5 is a partially plan cross-sectional view of the windshield wiper assembly as shown in Fig. 1.
Fig. 6 is a schematic operational view of the windshield wiper assembly as shown in Fig. 5.
Fig. 7 is a perspective view of a windshield wiper assembly in accordance with another preferred embodiment of the present invention.
Fig. 8 is a perspective view of a conventional windshield wiper assembly in accordance with the prior art.
Fig. 9 is an exploded perspective view of the conventional windshield wiper assembly as shown in Fig. 8.

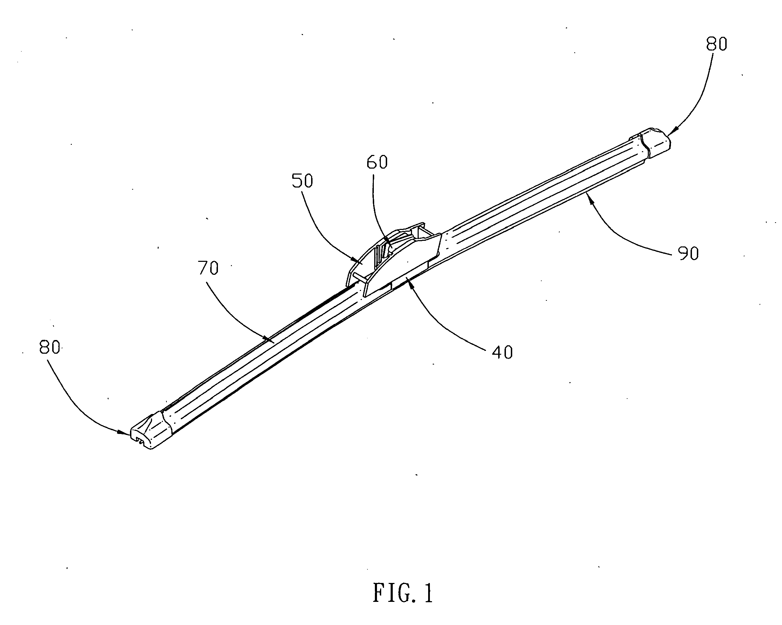

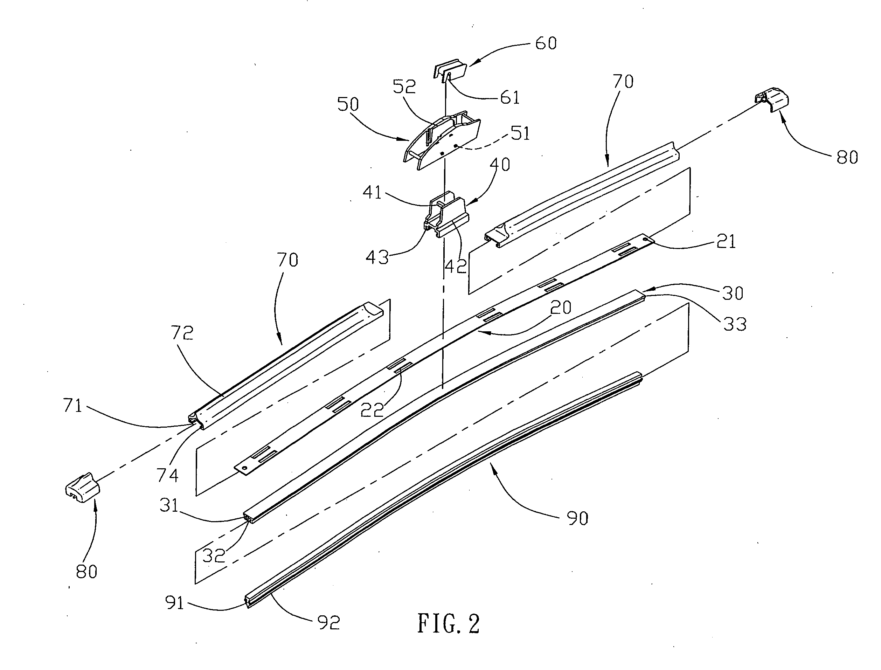

Referring to the drawings and initially to Figs. 1-5, a windshield wiper assembly in accordance with the preferred embodiment of the present invention comprises a steel plate 20 having two ends, a mounting plate 30 secured to the steel plate 20 and having an inside formed with a slideway 32, a wiper 90 detachably mounted on the mounting plate 30 and slidable into the slideway 32 of the mounting plate 30, two rubber protective hoods 70 each mounted around the steel plate 20, two side covers 80 each mounted on a respective one of the two ends of the steel plate 20 to stop the wiper 90 to prevent the wiper 90 from being detached from the mounting plate 30, a snapping seat 40 mounted around the steel plate 20 and the mounting plate 30 and located between the two rubber protective hoods 70, a shelter 50 mounted on the snapping seat 40, and a connecting block 60 pivotally mounted in the snapping seat 40.

The steel plate 20 is bent and is substantially arc-shaped. The steel plate 20 has two ends each formed with a locking hole 21 protruding outward from the mounting plate 30. The steel plate 20 has two side edges each formed with a plurality of hooks 22.

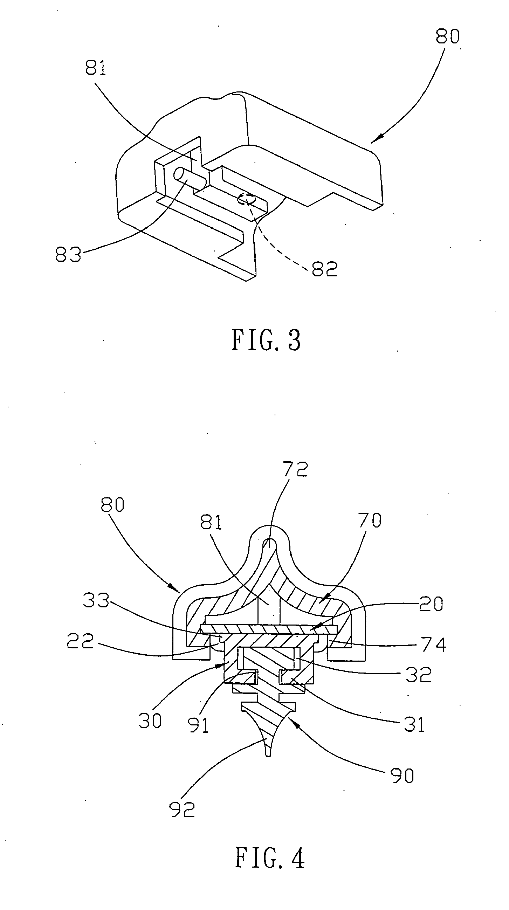

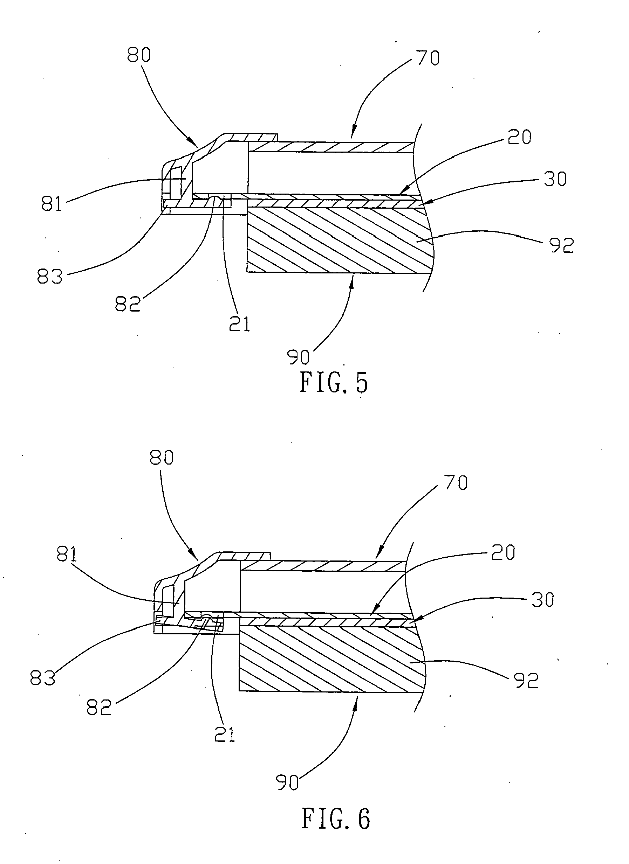

The mounting plate 30 is made of PC material. The mounting plate 30 is substantially arc-shaped and has a curvature equal to that of the steel plate 20. The mounting plate 30 has a length smaller than that of the steel plate as shown in Fig. 5 and has a width smaller than that of the steel plate 20 as shown in Fig. 4. The slideway 32 of the mounting plate 30 has a bottom provided with two inwardly extending guide rails 31. The mounting plate 30 is slidable onto the steel plate 20 and has two opposite sides each formed with an outwardly extending retaining flange 33 slidable onto the steel plate 20 and retained by the respective hooks 22 of the steel plate 20.

The snapping seat 40 has a hollow upper portion provided with a pivot shaft 41 and a lower portion formed with two substantially inverted L-shaped opposite snapping plates 43 snapped onto the steel plate 20 and the mounting plate 30 to secure the snapping seat 40 to the steel plate 20 and the mounting plate 30. The snapping seat 40 has a periphery formed with two opposite locking grooves 42 located above the snapping plates 43.

The shelter 50 is a hollow body enclosed around the periphery of the snapping seat 40. The shelter 50 has an inside formed with two opposite limit flanges 52 each rested on the periphery of the snapping seat 40 to prevent the shelter 50 from slipping and two opposite locking blocks 51 located under the limit flanges 52 and snapped into the locking grooves 42 of the snapping seat 40 to secure the shelter 50 to the snapping seat 40.

The connecting block 60 has a bottom formed with a pivot slot 61 pivotally mounted on the pivot shaft 41 of the snapping seat 40.

Each of the two rubber protective hoods 70 has an inside formed with an opening 71 slidable onto the steel plate 20. The opening 71 of each of the two rubber protective hoods 70 has a bottom provided with two inwardly extending resting edges 74 rested on a side of the steel plate 20 as shown in Fig. 4. Each of the two rubber protective hoods 70 has an upper portion formed with a substantially arc-shaped wind pressure face 72.

Each of the two side covers 80 is rested on a respective one of the two rubber protective hoods 70. Each of the two side covers 80 has a cross-sectional profile the same as that of each of the two rubber protective hoods 70 and has a size greater than that of each of the two rubber protective hoods 70. Each of the two side covers 80 has an inside provided with a substantially L-shaped depending support arm 81 having a first side provided with a locking boss 82 detachably snapped into the respective locking hole 21 of the steel plate 20 and a second side provided with an outwardly extending drive lever 83 that is movable to drive and pivot the support arm 81 to detach the locking boss 82 from the respective locking hole 21 of the steel plate 20.

The wiper 90 has two opposite sides each formed with a guide slot 91 slidable on a respective one of the two guide rails 31 of the mounting plate 30 to guide movements of the respective guide rail 31.

As shown in Figs. 3 and 6, the drive lever 83 of each of the two side covers 80 is movable upwardly to drive and pivot the support arm 81 to move the locking boss 82 downwardly by the leverage principle to detach the locking boss 82 from the respective locking hole 21 of the steel plate 20, so that each of the two side covers 80 is removable from the steel plate 20 to release the wiper 90. Thus, the wiper 90 is slidable outward from the slideway 32 of the mounting plate 30 to detach the wiper 90 from the mounting plate 30 for replacement of the wiper 90.

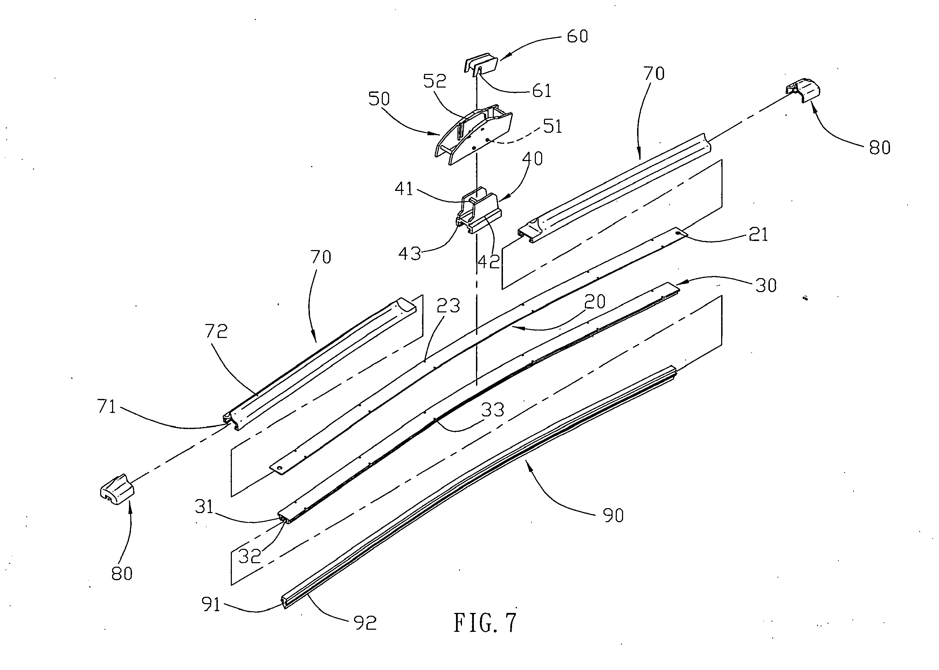

Referring to Fig. 7, the steel plate 20 is provided with a plurality of snapping members 23, and the mounting plate 30 is provided with a plurality of snapping members 33 snapped onto the snapping members 23 of the steel plate 20 to secure the mounting plate 30 to the steel plate 20.

Accordingly, the steel plate 20 is formed integrally without forming any groove so that the steel plate 20 has a greater strength, thereby enhancing the strength of the windshield wiper assembly. In addition, the steel plate 20 is a single element that is closely rested on the windshield of a car, so that the steel plate 20 is not worn out easily, thereby enhancing the lifetime of the windshield wiper assembly. Further, the wiper 90 is removable from the mounting plate 30 for replacement of the wiper 90, so that the wiper 90 can be replaced without having to replace the whole windshield wiper assembly, thereby saving the cost of maintenance of the windshield wiper assembly. Further, the side covers 80 are removable from the steel plate 20 easily and rapidly by the leverage principle to detach the wiper 90 from the mounting plate 30, so that the wiper 90 can be replaced easily and rapidly, thereby facilitating a user replacing the wiper 90.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A windshield wiper assembly, comprising:
a steel plate (20) having two ends;
a mounting plate (30) secured to the steel plate (20) and having an inside formed with a slideway (32);
a wiper (90) detachably mounted on the mounting plate (30) and slidable into the slideway (32) of the mounting plate (30).

2. The windshield wiper assembly in accordance with claim 1, further comprising:
two rubber protective hoods (70) each mounted around the steel plate (20);
two side covers (80) each mounted on a respective one of the two ends of the steel plate (20) to prevent the wiper from being detached from the mounting plate (30);
a snapping seat (40) mounted around the steel plate (20) and the mounting plate (30) and located between the two rubber protective hoods (70);
a shelter (50) mounted on the snapping seat (40);
a connecting block (60) pivotally mounted in the snapping seat (40).

3. The windshield wiper assembly in accordance with claim 2, wherein the steel plate (20) has two ends each formed with a locking hole (21) protruding outward from the mounting plate (30), and each of the two side covers (80) has an inside provided with a depending support arm (81) having a first side provided with a locking boss (82) detachably snapped into the respective locking hole (21) of the steel plate (20) and a second side provided with an outwardly extending drive lever (83).

4. The windshield wiper assembly in accordance with claim 1, wherein the steel plate (20) has two side edges each formed with a plurality of hooks (22), and the mounting plate (30) is slidable onto the steel plate (20) and has two opposite sides each formed with an outwardly extending retaining flange (33) slidable onto the steel plate (20) and retained by the respective hooks (22) of the steel plate (20).

5. The windshield wiper assembly in accordance with claim 1, wherein the slideway of the mounting plate (30) has a bottom provided with two inwardly extending guide rails (31), and the wiper has two opposite sides each formed with a guide slot (91) slidable on a respective one of the two guide rails (31) of the mounting plate (30) to guide movements of the respective guide rail (31).

6. The windshield wiper assembly in accordance with claim 2, wherein the snapping seat (40) has a lower portion formed with two substantially inverted L-shaped opposite snapping plates (43) snapped onto the steel plate (20) and the mounting plate (30) to secure the snapping seat (40) to the steel plate (20) and the mounting plate (30).

7. The windshield wiper assembly in accordance with claim 2, wherein the snapping seat (40) has a hollow upper portion provided with a pivot shaft (41), and the connecting block has a bottom formed with a pivot slot (61) pivotally mounted on the pivot shaft (41) of the snapping seat (40).

8. The windshield wiper assembly in accordance with claim 6, wherein the snapping seat (40) has a periphery formed with two opposite locking grooves (42) located above the snapping plates (43), and the shelter (50) is a hollow body enclosed around the periphery of the snapping seat (40) and has an inside formed with two opposite limit flanges (52) each rested on the periphery of the snapping seat (40) to prevent the shelter (50) from slipping and two opposite locking blocks (51) located under the limit flanges (52) and snapped into the locking grooves (42) of the snapping seat (40) to secure the shelter (50) to the snapping seat (40).

9. The windshield wiper assembly in accordance with claim 2, wherein each of the two rubber protective hoods (70) has an inside formed with an opening (71) slidable onto the steel plate (20), and the opening (71) of each of the two rubber protective hoods (70) has a bottom provided with two inwardly extending resting edges (74) rested on a side of the steel plate (20).

10. The windshield wiper assembly in accordance with claim 1, wherein the steel plate (20) is provided with a plurality of snapping members (23), and the mounting plate (30) is provided with a plurality of snapping members (23) snapped onto the snapping members (33) of the steel plate (20) to secure the mounting plate (30) to the steel plate (20).

## Amended claims

### Amended claims in accordance with Rule 86(2) EPC.

**1.** A windshield wiper assembly, comprising:
a steel plate (20) having two ends;
a mounting plate (30) secured to the steel plate (20) and having an inside formed with a slideway (32);
a wiper (90) detachably mounted on the mounting plate (30) and slidable into the slideway (32) of the mounting plate (30)
**characterized in**
**that** two side covers (80) each mounted on a respective one of the two ends of the steel plate (20) to prevent the wiper from being detached from the mounting plate (30).

**2.** The windshield wiper assembly in accordance with Claim 1, further comprising:
two rubber protective hoods (70) each mounted around the steel plate (20);
a snapping seat (40) mounted around the steel plate (20) and the mounting plate (30) and located between the two rubber protective hoods (70);
a shelter (50) mounted on the snapping seat (40);
a connecting block (60) pivotally mounted on the snapping seat (40).

**3.** The windshield wiper assembly in accordance with claim 2, wherein the steel plate (20) has two ends each formed with a locking hole (21) protruding outward from the mounting plate (30), and each of the two side covers (80) has an inside provided with a depending support arm (81) having a first side provided with a locking boss (82) detachably snapped into the respective locking hole (21) of the steel plate (20) and a second side provided with an outwardly extending drive lever (83).

**4.** The windshield wiper assembly in accordance with claim 1, wherein the steel plate (20) has two side edges each formed with a plurality of hooks (22), and the mounting plate (30) is slidable onto the steel plate (20) and has two opposite sides each formed with an outwardly extending retaining flange (33) slidable onto the steel plate (20) and retained by the respective hooks (22) of the steel plate (20).

**5.** The windshield wiper assembly in accordance with claim 2, wherein the snapping seat (40) has a lower portion formed with two substantially inverted L-shaped opposite snapping plates (43) snapped onto the steel plate (20) and the mounting plate (30) to secure the snapping seat (40) to the steel plate (20) and the mounting plate (30).

**6.** The windshield wiper assembly in accordance with claim 2, wherein the snapping seat (40) has a hollow upper portion provided with a pivot shaft (41), and the connecting block has a bottom formed with a pivot slot (61) pivotally mounted on the pivot shaft (41) of the snapping seat (40).

**7.** The windshield wiper assembly in accordance with claim 6, wherein the snapping seat (40) has a periphery formed with two opposite locking grooves (42) located above the snapping plates (43), and the shelter (50) is a hollow body enclosed around the periphery of the snapping seat (40) and has an inside formed with two opposite limit flanges (52) each rested on the periphery of the snapping seat (40) to prevent the shelter (50) from slipping and two opposite locking blocks (51) located under the limit flanges (52) and snapped into the locking grooves (42) of the snapping seat (40) to secure the shelter (50) to the snapping seat (40).

**8.** The windshield wiper assembly in accordance with claim 2, wherein each of the two rubber protective hoods (70) has an inside formed with an opening (71) slidable onto the steel plate (20), and the opening (71) of each of the two rubber protective hoods (70) has a bottom provided with two inwardly extending resting edges (74) rested on a side of the steel plate (20).

**9.** The windshield wiper assembly in accordance with claim 1, wherein the steel plate (20) is provided with a plurality of snapping members (23), and the mounting plate (30) is provided with a plurality of snapping members (23) snapped onto the snapping members (33) of the steel plate (20) to secure the mounting plate (30) to the steel plate (20).
